(19) Europäisches Patentamt
European Patent Office
Office européen des brevets

(11) Publication number: **0 433 976 A2**

(12) # EUROPEAN PATENT APPLICATION

(21) Application number: **90124575.3**

(22) Date of filing: **18.12.90**

(51) Int. Cl.[5]: **C08L 67/02**, C08L 23/04, B65D 65/38, //(C08L67/02, 23:04,23:08),(C08L23/04,67:02, 23:08)

(30) Priority: **18.12.89 JP 328895/89**
**23.10.90 JP 284565/90**

(43) Date of publication of application:
**26.06.91 Bulletin 91/26**

(84) Designated Contracting States:
**AT CH DE ES FR GB LI NL**

(71) Applicant: **KAO CORPORATION**
**14-10, Nihonbashi Kayabacho 1-chome**
**Chuo-ku Tokyo(JP)**

(72) Inventor: **Itou, Takashi**
**20-1, Innai 3-chome**
**Funabashi-shi, Chiba(JP)**
Inventor: **Amiya, Takayuki**
**11-3, Funazucho 2-chome**
**Wakayama-shi, Wakayama(JP)**
Inventor: **Tsuda, Yuka**
**5-62, Nishikoniri 3-chome**
**Wakayama-shi, Wakayama(JP)**
Inventor: **Yasuda, Yutaka**
**9-18, Tsudakita-machi**
**Kaizuka-shi, Osaka(JP)**

(74) Representative: **Hansen, Bernd, Dr. Dipl.-Chem. et al**
**Hoffmann, Eitle & Partner Patent- und Rechtsanwälte Arabellastrasse 4**
**W-8000 München 81(DE)**

(54) **Packaging material made of thermoplastic resin.**

(57) A packaging material made of a thermoplastic resin composition is disclosed. The thermoplastic resin composition comprises: 100 parts by weight of a resin composition comprising from 50 to 90% by weight, based on the total amount of the resin composition, of a polyester resin (A) and from 50 to 10% by weight, based on the total amount of the resin composition, of polyethylene (B); and from 1 to 30 parts by weight of a glycidyl group-containing copolymer (C) comprising ethylene monomer units and monomer units of a glycidyl ester of an $\alpha,\beta$-unsaturated carboxylic acid.

The packaging material of this invention has excellent mechanical properties and a high surface gloss as well as good gas and moisture barrier properties.

EP 0 433 976 A2

# PACKING MATERIAL MADE OF THERMOPLASTIC RESIN

## FIELD OF THE INVENTION

The present invention relates to a thermoplastic resin packaging material having excellent mechanical properties, good gas barrier and moisture barrier properties, and a high surface gloss.

## BACKGROUND OF THE INVENTION

In the packaging materials currently being produced, polyolefin resins such as polyethylene and polypropylene and polyester resins such as polyethylene terephthalate are used in large quantities. Polyolefin resins for packaging use are characterized as being low in resin cost and easily molded or shaped, so that they are being used for producing many kinds of containers such as those for liquid detergents. However, since polyolefin resins are poor in strength, they cannot be molded into containers having small wall thicknesses. Further, because they are also poor in gas barrier properties, such as oxygen or carbon dioxide barrier properties, polyolefin resins have a disadvantage that they cannot be used as packaging materials for substances, such as foods, that can be deteriorated by oxygen.

On the other hand, polyester resins have excellent properties and, hence, can be subjected to biaxial stretch molding to produce high-strength sheets and thin-wall containers. In addition, compared to polyolefin resins, polyester resins generally have better gas barrier properties, such as oxygen or carbon dioxide barrier properties, so that they are used also as packaging materials for foods and beverages, such as soy sauce and carbonated drinks. However, polyester resins have poor moisture barrier properties as compared with polyolefin resins and, because of this, they have been unusable as packaging materials for substances which should be protected from moisture or for substances which, if part of the water contained therein is lost by evaporation, may cause problems due to the composition change.

In order to improve impact strength at low temperatures, JP-A-58-17148 (corresponding to U.S. Patent 4,461,871) proposes a polyester resin containing a glycidyl group-containing copolymer and an ethylene/α-olefin copolymer. Also, in order to improve mechanical strength or physical properties, JP-A-61-60744 proposes a resin composition contains a polypropylene resin, a polyester resin and an epoxy group-containing copolymer. (The term "JP-A" as used herein means an "unexamined published Japanese patent application".)

Further, in order to improve both gas barrier and moisture barrier properties, laminating of polyolefin or polyester resins to aluminum foils or high-barrier resin films is conducted, but in general this method inevitably necessitates a complicated production process. Furthermore, JP-B-61-39336 discloses a thermoplastic resin container which is made of a composition comprising a polyester resin and a polyolefin resin and has a metallic sheen. (The term "JP-B" as used herein means an "examined Japanese patent publication".) However, since the above composition is a mere blend of a polyester resin and a polyolefin resin, the bonding between both resins is so poor that the container is apt to suffer surface stripping by cellophane taped or the like. Thus, containers having sufficient strength cannot be obtained from the above-proposed composition. JP-A-62-153338 discloses a resin composition comprising a polyester resin, a polyolefin resin, a glycidyl group-containing copolymer, and a fatty acid ester or a partial saponification product thereof. However, this proposal is intended to improve the slip properties of polyester resins, and the moisture barrier properties of polyester resins have hardly been improved in this resin composition comprising the above-mentioned ingredients in respective proportions within specified ranges.

As described above, the conventional techniques have been unable to produce a resin packaging material having a well-balanced combination of properties, i.e., good gas barrier and moisture barrier properties and excellent mechanical properties including physical strength, impact resistance, and surface stripping resistance.

Therefore, a packaging material has been desired which has mechanical properties equal to or better than those of the conventional packaging materials and is excellent in both of gas barrier properties and moisture barrier properties. In order to produce and use such a packaging material industrially, it is essential that the packaging material be able to be produced by a simple molding technique and have an excellent appearance.

## SUMMARY OF THE INVENTION

Under the above circumstances, the present inventors have conducted intensive studies. As a result, it

has now been found that a packaging material obtained by molding a thermoplastic resin composition comprising a polyester resin, polyethylene, and a glycidyl group-containing copolymer comprising, as essential constituent units, ethylene monomer units and monomer units of an α,β-unsaturated carboxylic acid glycidyl ester can meet all of the above requirements. The present invention has been completed based on this finding. Accordingly, an object of the present invention is to provide a thermoplastic resin packaging material having excellent mechanical properties and a high surface gloss as well as good gas and moisture barrier properties.

## DETAILED DESCRIPTION OF THE INVENTION

The thermoplastic resin packaging material provided by the present invention is made of a thermoplastic resin composition comprising:

(1) 100 parts by weight of a resin composition comprising from 10 to 90% by weight, based on the total amount of the resin composition (1), of a polyester resin (A) and from 90 to 10% by weight, based on the total amount of the resin composition (1), of polyethylene (B); and

(2) from 1 to 30 parts by weight of a glycidyl group-containing copolymer (C) comprising ethylene monomer units and monomer units of a glycidyl ester of an α,β-unsaturated carboxylic acid.

The polyester resin (A) employed in this invention is a thermoplastic polymer or copolymer obtained by the condensation polymerization of monomers comprising one or more dicarboxylic acids and one or more diols. The polyester resin (A) is also obtained by ester interchange polymerization of one or more lower alkyl esters of dicarboxylic acids (e.g., methyl esters) and one or more diols.

Examples of the dicarboxylic acids include aromatic dicarboxylic acids such as terephthalic acid, isophthalic acid, phthalic acid, and naphthalenedicarboxylic acid; alicyclic dicarboxylic acids such as cyclohexanedicarboxylic acid; and aliphatic dicarboxylic acids such as adipic acid and sebacic acid. These may be used alone or as a combination of two or more thereof.

Examples of the diols include aliphatic glycols such as ethylene glycol, 1,3-propanediol, 1,4-butanediol, neopentyl glycol, 1,5-pentanediol, and 1,6-hexanediol; and alicyclic glycols such as 1,4-cyclohexanediol. These may be used alone or as a mixture of two or more thereof.

Examples of polyesters obtained from particularly preferred combinations of dicarboxylic acids and diols are aromatic polyesters such as polyethylene terephthalate, polybutylene terephthalate, polyethylene isophthalate, polyethylene 2,6-naphthalate, and the like. Of these, polyethylene terephthalate, polyethylene isophthalate, and mixtures thereof are more preferred. It should, however, be noted that polyethylene isophthalate herein means one in which 50 mol% or more of the dicarboxylic acid monomer units are isophthalic acid monomer units and the other dicarboxylic acid monomer units are monomer units of one or more compounds selected from the above-mentioned dicarboxylic acids, preferably of terephthalic acid.

The polyester resin (A) preferably has an intrinsic viscosity (IV) of from 0.4 to 1.8 dl/g, more preferably from 0.6 to 1.5 dl/g, as measured at 25° C in a phenol-tetrachloroethane (6:4 by weight) mixed solvent. If the intrinsic viscosity of the polyester resin (A) is below 0.4 dl/g, the final packaging material has insufficient strength. If the intrinsic viscosity thereof is above 1.8 dl/g, the resulting thermoplastic resin composition is too high in melt viscosity to be molded.

Examples of the polyethylene (B) employed in this invention include low density polyethylenes obtained by high pressure processes, linear low density polyethylenes which are copolymers of ethylene and α-olefins and obtained by medium-to-low pressure processes, high-to-medium density polyethylenes obtained by medium-to-low pressure processes, and modified polyethylenes which are copolymers of ethylene and vinyl compounds.

Examples of such vinyl compounds include vinyl ethers; vinyl esters such as vinyl acetate and vinyl propionate; alkyl (e.g., methyl, ethyl, propyl, and butyl) esters of acrylic or methacrylic acid; and other vinyl compounds such as acrylonitrile, styrene, acrylic acid and methacrylic acid, and metal (e.g., Na, K, Ca, Mg, Zn) salts of the acids. However, glycidyl esters of α,β-unsaturated carboxylic acids are not included in the vinyl compounds to be copolymerized with ethylene.

Preferred of the above-mentioned polyethylenes and modified polyethylenes are high-to-medium density and low density polyethylenes.

It is preferable that the polyethylene (B) employed in this invention have a melt viscosity of from 0.01 to 30 g/10 min, more preferably from 0.1 to 20 g/10 min, in terms of melt flow rate (MFR).

In the glycidyl group-containing copolymer (C) employed in this invention, which comprises, as essential constituent units, ethylene monomer units and monomer units of an α,β-unsaturated carboxylic acid glycidyl ester, the ethylene monomer units may contain monomer units of an olefin copolymerizable with ethylene, in an amount less than 10 mol% based on the ethylene monomer units.

The copolymerized amount of ethylene monomer units in the glycidyl group-containing copolymer (C) is from 40 to 99 % by weight, preferably from 60 to 98 % by weight.

The glycidyl ester of an $\alpha,\beta$-unsaturated carboxylic acid is represented by formula:

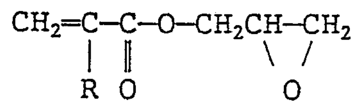

wherein R represents a hydrogen atom, a lower alkyl group (preferably, one having 1 to 5 carbon atoms), or a lower alkyl group having a substituent such as a carboxyl group, a glycidyl ester group, etc. Specific examples of this glycidyl ester include glycidyl acrylate, glycidyl methacrylate, glycidyl itaconate, and the like, with glycidyl methacrylate being most preferred. In the glycidyl group-containing copolymer (C), the copolymerized amount of the $\alpha,\beta$-unsaturated carboxylic acid glycidyl ester is generally from 1 to 50% by weight, preferably from 2 to 30% by weight.

In producing the copolymer (C), one or more unsaturated monomers copolymerizable with glycidyl ester monomer may be copolymerized as long as the amount of such unsaturated monomers is 40% by weight or less, based on the total weight of the glycidyl group-containing copolymer (C). Examples of such unsaturated monomers include vinyl ethers; vinyl esters such as vinyl acetate and vinyl propionate; alkyl (e.g., methyl, ethyl, propyl, and butyl) esters of acrylic or methacrylic acid; and other monomers such as acrylonitrile, styrene, and carbon monoxide. of these, vinyl acetate is most preferred.

Preferred examples of the glycidyl group-containing copolymer (C) employed in this invention, which contains, as essential constituent units, ethylene monomer units and monomer units of an $\alpha,\beta$-unsaturated carboxylic acid glycidyl ester, include ethylene/glycidyl methacrylate copolymers, ethylene/vinyl acetate/glycidyl methacrylate copolymers, ethylene/glycidyl acrylate copolymers, ethylene/vinyl acetate/glycidyl acrylate copolymers, and the like.

Since the glycidyl group-containing copolymer (C) comprising, as essential constituent units, ethylene monomer units and monomer units of an $\alpha,\beta$-unsaturated carboxylic acid glycidyl ester has good compatibility with both of the polyester resin (A) and polyethylene (B), it functions as a compatibilizer for components (A) and (B) to improve interfacial bonding. Because of this, the resulting composition can retain a stable phase structure and, hence, packaging materials obtained from the composition have excellent mechanical strength and appearance.

The proportion of the polyester resin (A) to polyethylene (B) in the thermoplastic resin packaging material of this invention is from 10/90 to 90/10 in terms of the ratio of (A)/(B) by weight. If the amount of the polyester resin (A) based on the total amount of (A) and (B) is below 10% by weight, the packaging material has insufficient strength and poor gas barrier properties. If the amount of the polyester resin (A) exceeds 90% by weight, the packaging material has poor moisture barrier properties. In the case where the thermoplastic resin packaging material of this invention is one obtained through molding accompanied by stretching, such as biaxial stretch blow molding, the proportion of the polyester resin (A) to polyethylene (B) in the composition is preferably from 50/50 to 90/10 in terms of the ratio of (A)/(B) by weight. If the amount of the polyester resin (A) is below 50% by weight based on the total amount of (A) and (B), the thermoplastic resin composition has poor stretchability, making the molding thereof difficult.

The amount of the glycidyl group-containing copolymer (C), which comprises, as essential constituent units, ethylene monomer units and monomer units of an $\alpha,\beta$-unsaturated carboxylic acid glycidyl ester, contained in the thermoplastic resin packaging material of this invention is from 1 to 30 parts by weight, preferably from 2 to 20 parts by weight, per 100 parts by weight of the sum of the polyester resin (A) and polyethylene (B). If the amount of the copolymer (C) is below 1 part by weight, the ingredient compatibility, interfacial bonding, mechanical strength, impact resistance, and other properties of the composition are insufficient for practical use. On the other hand, even if the amount of the copolymer (C) is increased beyond 30 parts by weight, its effect cannot be heightened any more, resulting only in a decrease in mechanical strength.

One or more additives may be incorporated into the thermoplastic resin packaging material of this invention as long as the additives used do not defeat the object of this invention. As such additives, ones commonly used with plastic molded articles may be mentioned. Examples thereof include antioxidants, heat stabilizers, ultraviolet absorbers, dyestuff or pigments, antistatic agents, and the like additives.

The thermoplastic resin packaging material of this invention include films, tubes, molded or otherwise formed containers, and other packaging materials all of which are made of the thermoplastic resin

composition comprising the above-described ingredients in respective proportions within the above-specified ranges. Examples of the molded or formed containers include blow-molded containers produced by extrusion blow molding, biaxial stretch blow molding, or the like, and sheet-formed containers produced by vacuum molding, compressive air molding, or the like.

It is essential that the thermoplastic resin packaging material of this invention comprises the polyester resin (A), polyethylene (B), and the glycidyl group-containing copolymer (C) comprises, as essential constituent units, ethylene monomer units and monomer units of an $\alpha,\beta$-unsaturated carboxylic acid glycidyl ester. In producing this packaging material, these essential resin ingredients should be blended at the time of molding thereof or prior to the molding. The blending may be conducted by dry blending the resin ingredients in predetermined weight proportions, and then directly subjecting the dry blend to kneading in an extruder during melt processing to produce molded products. In this case, however, it is necessary to select a suitable extruding screw and/or extruding conditions which can attain sufficient kneading. In order to perform sufficient kneading to obtain uniform resin packaging materials, it is preferable that the resin ingredients be sufficiently kneaded with a twin-screw extruder or by other suitable means and formed into a powder or pellets beforehand, and this powdered or pelleted resin composition be then subjected to molding.

In the case where the packaging material of this invention is a container, the desired properties, i.e., sufficient strength and gas and moisture barrier properties, and some degree of surface gloss can be imparted to the container even by extrusion blow molding. However, a packaging material obtained by forming a preform by extrusion or injection molding, and then subjecting this preform to stretch blow molding can have further improved performances. The reason for this may be that polyester chains and polyethylene chains are orientated by the stretching and, as a result, the movement of the molecular chains is suppressed and, hence, the diffusion of gases and water vapor into the resin is suppressed.

Stretch blow molding can provide packaging materials having surface appearances which are more pearl-like and glossy than those of packaging materials obtained by extrusion blow molding. The reason for this may be that the polyester phase and polyethylene phase are lamellarly orientated by the stretching to form polyester-phase lamellae and polyethylene-phase lamellae superposed alternately, and an incident light is reflected in a multiplex manner at the interfaces between both phases and the reflected lights interfere with each other.

Examples of the thermoplastic resin packaging material of this invention include packaging or wrapping films for foods etc. and containers such as bottles for cosmetics, foods, beverages, etc. and drinking vessels. The packaging material of this invention is especially suited for packaging a substance that is prone to be adversely affected by oxygen or moisture, or for packaging a product required to have a beautiful appearance.

The present invention will be explained in more detail by reference to the following Examples, which should not be construed to be limiting the scope of the invention.

In the following Examples and Comparative Examples, all the resin compositions used therein were formed into packaging materials after being melt-kneaded, pelleted, and then dried beforehand. The melt kneading was conducted by means of twin-screw extruder PCM45-30 manufactured by Ikegai Corporation, Japan, at a melt-kneading temperature of 280 °C.

Resins used in the Examples and Comparative Examples and their reference symbols are as follows.

(1) Polyester resin (A):

- a: Polyethylene terephthalate IV = 1.4 dl/g
- b: Polyethylene terephthalate IV = 0.75 dl/g
- c: Polyester obtained by the condensation polymerization of a 10:90 mixture of terephthalic acid and isophthalic acid with ethylene glycol IV = 0.85 dl/g

(2) Polyethylene (B):

- d: High density polyethylene MFR = 0.3 g/10 min
- e: Low density polyethylene MFR = 1.0 g/10 min

(3) Glycidyl group-containing copolymer (C) comprising, as essential constituent units, ethylene monomer units and monomer units of an $\alpha,\beta$-unsaturated carboxylic acid glycidyl ester:

- f: Ethylene/glycidyl methacrylate (90/10) copolymer
- g: Ethylene/vinyl acetate/glycidyl methacrylate (90/5/5) copolymer

In the Examples and Comparative Examples, tests for evaluating various properties were conducted according to the following methods.

<u>Oxygen Permeability Test of Film:</u>

Oxygen permeation constant (unit: $cm^3$ $mm/m^2$ 24h atm) was measured in accordance with JIS K7126, Method A. (The them "JIS" as used herein means "Japanese Industrial Standard".)

Moisture Permeability Test of Film:

Moisture permeability was measured in accordance with JIS Z0208. The measured value was corrected by multiplying it by the film thickness value to give moisture permeation rate (unit: g $mm/m^2$ 24h).

Compressive Strength Test of Bottle:

The bottle to be tested was filled with water and capped. This bottle was subjected to a compression test using Tensilon UCT-100 manufactured by Orientec Corporation, Japan to measure the primary compressive strength of the bottle. Five bottles were tested and the average value was calculated.

Oxygen Permeability Test of Bottle:

The oxygen permeation constant of the bottle was measured at 23° C under ordinary pressure by using permeability tester GPM 250 manufactured by Gasukuro Kogyo Inc., Japan. For the purpose of comparing the measured values for various kinds of containers, each measured value was divided by the surface area value for the container and multiplied by the average wall thickness value for the container, and the thus-corrected value was regarded as oxygen permeation constant (unit: $cm^3$ $mm/m^2$ 24h atm).

Moisture Permeability Test of Bottle:

Calcium chloride was place in the bottle to be tested, and this bottle was sealed and then allowed to stand in a room having a temperature of 40° C and a relative humidity of 90%. The weight of the bottle was measured every other day to determine the weight increase per day. For the purpose of comparing the measured values for various kinds of containers, each measured value was divided by the surface area value for the container and multiplied by the average wall thickness value for the container to give moisture permeation rate (unit: g $mm/m^2$ 24h).

Surface Stripping Test by Cellophane Tape:

The container to be tested was allowed to stand for one night at 20° C and a relative humidity of 65%. Cellophane tape (width 18 mm) manufactured by Nichiban Co., Ltd., Japan, was then applied over a length of 20 cm to the side wall of the container in the direction of the height of the container, while inclusion of air between the tape and the wall surface was being avoided. Subsequently, the tape was quickly peeled, from the upper to the lower part of the tape. The surface stripping resistance was evaluated in terms of the proportion of the area of the container surface's part stripped by the tape to the area of the whole part to which the tape was applied.

excellent: no stripping.
good: 1/10 or less was stripped.
bad: 1/10 to 1/2 was stripped.
serious: 1/2 or more was stripped.

Appearance:

Whether the sample had a pearl-like sheen was examined.

EXAMPLES 1 TO 6 AND COMPARATIVE EXAMPLES 1 TO 4

Thermoplastic resin compositions prepared by blending polyester resins (A), polyethylenes (B), and glycidyl group-containing copolymers (C) comprising, as essential constituent units, ethylene monomer units and monomer units of an $\alpha,\beta$-unsaturated carboxylic acid glycidyl ester, according to various formulations shown in Table 1, were subjected to pressing to obtain films having a thickness of about 0.1 mm. The results of the evaluations of these films are shown in Table 2.

The films obtained in Examples 1 to 6 are low in both oxygen permeability and moisture permeability, showing that they have better balances of barrier properties than the film made of polyethylene terephthalate only (Comparative Example 1) and the film made of high density polyethylene only (Comparative Example 2). The film made of a low-polyethylene-content resin composition (Comparative Example 3) is insufficient in moisture barrier properties. Further, the film made of a resin composition not containing a glycidyl group-containing copolymer (C) comprising, as essential constituent units, ethylene monomer units and monomer units of an $\alpha,\beta$-unsaturated carboxylic acid glycidyl ester (Comparative Example 4) was very brittle and unable to be subjected to permeability tests.

EXAMPLES 7 TO 12 AND COMPARATIVE EXAMPLES 5 TO 7

Thermoplastic resin compositions prepared by blending polyester resins (A), polyethylenes (B), and glycidyl group-containing copolymers (C) comprising, as essential constituent units, ethylene monomer units and monomer units of an $\alpha,\beta$-unsaturated carboxylic acid glycidyl ester, according to various formulations shown in Table 1, were molded by extrusion blow molding into flat bottles each having a capacity of 600 ml, a body width of about 96 mm, a body depth of about 52 mm, a height of 235 mm, and a mouth diameter of 27 mm. This molding was done by means of molding machine Bu-7054M-P manufactured by Tahara Seisakusho Co., Ltd., Japan, using a 70 $\phi$ extrusion screw at a melt temperature of 280 °C and a mold temperature of 20 to 40 °C. The results of the evaluations of these containers are shown in Table 3.

For the purpose of comparison, bottles were likewise molded from resin compositions not containing a glycidyl group-containing copolymer (C) comprising, as essential constituent units, ethylene monomer units and monomer units of an $\alpha,\beta$-unsaturated carboxylic acid glycidyl ester, and also from a polyethylene only. The results of evaluations are shown in Table 3.

The bottles of this invention obtained in Examples 7 to 12 were satisfactory in all of compressive strength, oxygen permeability, and moisture permeability, whereas the bottles made of resin compositions not containing a glycidyl group-containing copolymer (C) comprising, as essential constituent units, ethylene monomer units and monomer units of an $\alpha,\beta$-unsaturated carboxylic acid glycidyl ester (Comparative Examples 5 and 6) were too low in compressive strength to be used practically. The polyethylene bottle (Comparative Example 7) showed a too large oxygen permeation constant. With respect to appearance, the bottles of the Examples and Comparative Examples 5 and 7 assumed a pale pearl-like sheen.

EXAMPLES 13 TO 18 AND COMPARATIVE EXAMPLES 8 TO 11

Thermoplastic resin compositions prepared by blending polyester resins (A), polyethylenes (B), and glycidyl group-containing copolymers (C) comprising, as essential constituent units, ethylene monomer units and monomer units of an $\alpha,\beta$-unsaturated carboxylic acid glycidyl ester, according to various formulations shown in Table 1, were subjected to injection molding at a melt temperature of 280 °C and a mold temperature of 20 to 40 °C to produce preforms having an outer diameter of 27 mm, a length of 115 mm, and a wall thickness of 3 mm. Each preform was subsequently subjected to biaxial stretch blow molding in which the preform was stretched at 100 °C in the direction of the axis by means of a stretching rod and, at the same time, was expanded by blowing compressed air of 5 to 15 atm in the preform, thereby molding a cylindrical bottle having a capacity of 600 ml, a body diameter of 62 mm, a height of 220 mm, and a mouth diameter of 27 mm. As the molding machine, an injection blow molding machine manufactured by Nissei ASB Machine Co., Ltd., Japan, was used. The results of the evaluations of the thus-obtained containers are shown in Table 4.

For the purpose of comparison, bottles were likewise molded from resin compositions containing only a small amount of a glycidyl group-containing copolymer (C) comprising, as essential constituent units, ethylene monomer units and monomer units of an $\alpha,\beta$-unsaturated carboxylic acid glycidyl ester, and also molded from polyethylene terephthalate only and from a resin composition containing polyethylene in a small proportion. The results of the evaluations of these bottles are shown in Table 4.

The bottles of this invention obtained in Examples 13 to 18 were satisfactory in all of compressive strength, oxygen permeability, and moisture permeability, and had a beautiful appearance with a strong pearl-like sheen. By contrast, the bottles made of resin compositions containing only 0.5 part by weight of a glycidyl group-containing copolymer (C) comprising, as essential constituent units, ethylene monomer units and monomer units of an $\alpha,\beta$-unsaturated carboxylic acid glycidyl ester (Comparative Examples 8 and 9) were too low in compressive strength to be used practically. The polyethylene terephthalate bottle (Comparative Example 10) showed a too high moisture permeation rate. Further, the bottle made of a resin composition having a low polyethylene content (Comparative Example 11) showed a too high moisture permeation rate and unfavorably had a translucent white appearance.

TABLE 1

| | Polyester (A) | | | Polyethylene (B) | | Glycidyl Group-containing Copolymer(C) | |
|---|---|---|---|---|---|---|---|
| | a | b | c | d | e | f | g |
| Example 1 | - | 60 | - | 40 | - | 5 | - |
| Example 2 | - | 30 | - | 70 | - | 3 | - |
| Example 3 | - | 40 | 40 | 20 | - | 10 | - |
| Example 4 | - | 45 | 15 | 40 | - | 5 | - |
| Example 5 | - | 80 | - | - | 20 | 5 | - |
| Example 6 | - | 20 | - | - | 80 | 3 | - |
| Example 7 | 80 | - | - | 20 | - | 5 | - |
| Example 8 | 60 | - | - | 40 | - | 3 | - |
| Example 9 | 40 | - | 40 | 20 | - | 5 | - |
| Example 10 | 30 | - | 30 | 40 | - | 5 | - |
| Example 11 | - | 60 | - | 40 | - | 7 | - |
| Example 12 | - | 30 | 30 | 40 | - | 7 | - |
| Example 13 | - | 80 | - | 20 | - | 5 | - |
| Example 14 | - | 60 | - | 40 | - | 5 | - |
| Example 15 | - | 80 | - | 20 | - | - | 5 |
| Example 16 | - | 40 | 40 | 20 | - | 5 | - |
| Example 17 | - | 80 | - | - | 20 | 5 | - |
| Example 18 | - | 50 | - | - | 50 | 5 | - |
| Comparative Example 1 | - | 100 | - | - | - | - | - |
| Comparative Example 2 | - | - | - | 100 | - | - | - |

TABLE 1(cont'd)

| | Polyester (A) | | | Polyethylene (B) | | Glycidyl Group-containing Copolymer(C) | |
|---|---|---|---|---|---|---|---|
| | a | b | c | d | e | f | g |
| Comparative Example 3 | - | 95 | - | 5 | - | 5 | - |
| Comparative Example 4 | - | 60 | - | 40 | - | - | - |
| Comparative Example 5 | 80 | - | - | 20 | - | - | - |
| Comparative Example 6 | 60 | - | - | 40 | - | - | - |
| Comparative Example 7 | - | - | - | 100 | - | - | - |
| Comparative Example 8 | - | 80 | - | 20 | - | 0.5 | - |
| Comparative Example 9 | - | 80 | - | - | 20 | 0.5 | - |
| Comparative Example 10 | - | 100 | - | - | - | - | - |
| Comparative Example 11 | - | 95 | - | 5 | - | 5 | - |

Note: Numerals in Table 1 for indicating ingredient amounts are given in terms of parts by weight.

TABLE 2

| | Oxygen Permeation Constant ($cm^3mm/m^2$ 24h atom) | Moisture Permeation Rate (g $mm/m^2$ 24h) |
|---|---|---|
| Example 1 | 14.1 | 0.65 |
| Example 2 | 32.2 | 0.42 |
| Example 3 | 3.7 | 0.61 |
| Example 4 | 9.2 | 0.79 |
| Example 5 | 5.9 | 1.5 |
| Example 6 | 48.0 | 0.37 |
| Comparative Example 1 | 4.8 | 2.0 |
| Comparative Example 2 | 75.0 | 0.3 |
| Comparative Example 3 | 5.0 | 1.9 |
| Comparative Example 4 | not detected | not detected |

TABLE 3

| | Compressive Strength (kg) | Oxygen Permeation Constant ($cm^3 mm/m^2$ 24h atom) | Moisture Rate (g $mm/m^2$ 24h) | Appearance |
|---|---|---|---|---|
| Example 7 | 44 | 9.6 | 0.86 | pale pearl-like sheen |
| Example 8 | 29 | 18.5 | 0.43 | ditto |
| Example 9 | 54 | 3.5 | 0.63 | ditto |
| Example 10 | 41 | 8.8 | 0.40 | ditto |
| Example 11 | 41 | 17.0 | 0.63 | ditto |
| Example 12 | 48 | 9.7 | 0.39 | ditto |
| Comparative Example 5 | 17 | 56.6 | 2.55 | ditto |
| Comparative Example 6 | 13 | 45.3 | 1.93 | ditto |
| Comparative Example 7 | 32 | 70.6 | 0.26 | white |

TABLE 4

| | Compressive Strength (kg) | Oxygen Permeation Constant ($cm^3 mm/m^2$ 24h atom) | Moisture Rate (g $mm/m^2$ 24h) | Appearance | Surface Stripping Resistance |
|---|---|---|---|---|---|
| Example 13 | 38 | 6.2 | 0.52 | pearl-like sheen | good |
| Example 14 | 42 | 13.6 | 0.28 | ditto | good |
| Example 15 | 34 | 6.3 | 0.59 | ditto | good |
| Example 16 | 55 | 3.5 | 0.37 | ditto | good |
| Example 17 | 53 | 7.2 | 0.66 | ditto | good |
| Example 18 | 36 | 18.9 | 0.22 | ditto | good |
| Comparative Example 8 | 16 | 15.7 | 1.19 | ditto | serious |
| Comparative Example 9 | 13 | 11.2 | 0.85 | ditto | serious |
| Comparative Example 10 | 67 | 4.5 | 0.94 | transparent | excellent |
| Comparative Example 11 | 63 | 5.0 | 0.89 | translucent, white | excellent |

While the invention has been described in detail and with reference to specific embodiments thereof, it will be apparent to one skilled in the art that various changes and modifications can be made therein without departing from the spirit and scope thereof.

## Claims

1. A packaging material made of a thermoplastic resin composition comprising:
   (1) 100 parts by weight of a resin composition comprising from 10 to 90% by weight, based on the total amount of the resin composition (1), of a polyester resin (A) and from 90 to 10% by weight, based on the total amount of the resin composition (1), of polyethylene (B); and
   (2) from 1 to 30 parts by weight of a glycidyl group-containing copolymer (C) comprising ethylene monomer units and monomer units of a glycidyl ester of an $\alpha,\beta$-unsaturated carboxylic acid.

2. A packaging material as in claim 1, wherein the polyester resin (A) is a thermoplastic polymer or copolymer obtained by the condensation polymerization of monomers comprising a dicarboxylic acid or a derivative thereof and a diol or a derivative thereof.

3. A packaging material as in claim 1, wherein the polyethylene (B) is at least one selected from the group consisting of low density polyethylenes obtained by high pressure processes, linear low density polyethylenes which are copolymers of ethylene and $\alpha$-olefins and obtained by medium-to-low pressure processes, high-to-medium density polyethylenes obtained by medium-to-low pressure processes, and modified polyethylenes which are copolymers of ethylene and vinyl compounds.

**4.** A packaging material as in claim 1, wherein the glycidyl ester of an α,β-unsaturated carboxylic acid is represented by formula:

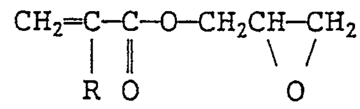

wherein R represents a hydrogen atom, a lower alkyl group, or a lower alkyl group substituted by a carboxyl group or a glycidyl ester group.

**5.** A packaging material as in claim 1, wherein the copolymerized amount of the α,β-glycidyl ester in the glycidyl group-containing copolymer (C) is from 1 to 50 % by weight.

**6.** A packaging material as in claim 1, wherein the amount of glycidyl group-containing copolymer (C) in the thermoplastic resin composition is from 2 to 20 parts by weight.

**7.** A container made of a thermoplastic resin composition comprising:
(1) 100 parts by weight of a resin composition comprising from 10 to 90% by weight, based on the total amount of the resin composition (1), of a polyester resin (A) and from 90 to 10% by weight, based on the total amount of the resin composition (1), of polyethylene (B); and
(2) from 1 to 30 parts by weight of a glycidyl group-containing copolymer (C) comprising ethylene monomer units and monomer units of a glycidyl ester of an α,β-unsaturated carboxylic acid.

**8.** A container as in claim 7, wherein the polyester resin (A) is a thermoplastic polymer or copolymer obtained by the condensation polymerization of monomers comprising a dicarboxylic acid or a derivative thereof and a diol or a derivative thereof.

**9.** A container as in claim 7, wherein the polyethylene (B) is at least one selected from the group consisting of low density polyethylenes obtained by high pressure processes, linear low density polyethylenes which are copolymers of ethylene and α-olefins and obtained by medium-to-low pressure processes, high-to-medium density polyethylenes obtained by medium-to-low pressure processes, and modified polyethylenes which are copolymers of ethylene and vinyl compounds.

**10.** A container as in claim 7, wherein the glycidyl ester of an α,β-unsaturated carboxylic acid is represented by formula:

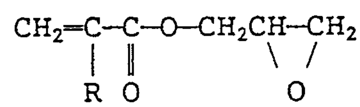

wherein R represents a hydrogen atom, a lower alkyl group, or a lower alkyl group substituted by a carboxyl group or a glycidyl ester group.

**11.** A container as in claim 7, wherein the copolymerized amount of the α,β-glycidyl ester in the glycidyl group-containing copolymer (C) is from 1 to 50 % by weight.

**12.** A container as in claim 7, wherein the amount of glycidyl group-containing copolymer (C) in the thermoplastic resin composition is from 2 to 20 parts by weight.

**13.** A thermoplastic resin packaging material obtained by the stretch molding of a thermoplastic resin composition comprising:
(1) 100 parts by weight of a resin composition comprising from 50 to 90% by weight, based on the total amount of the resin composition (1), of a polyester resin (A) and from 50 to 10% by weight,

based on the total amount of the resin composition (1), of polyethylene (B); and
(2) from 1 to 30 parts by weight of a glycidyl group-containing copolymer (C) comprising ethylene monomer units and monomer units of a glycidyl ester of an α,β-unsaturated carboxylic acid.

**14.** A packaging material as in claim 13, wherein the polyester resin (A) is a thermoplastic polymer or copolymer obtained by the condensation polymerization of monomers comprising a dicarboxylic acid or a derivative thereof and a diol or a derivative thereof.

**15.** A packaging material as in claim 13, wherein the polyethylene (B) is at least one selected from the group consisting of low density polyethylenes obtained by high pressure processes, linear low density polyethylenes which are copolymers of ethylene and α-olefins and obtained by medium-to-low pressure processes, high-to-medium density polyethylenes obtained by medium-to-low pressure processes, and modified polyethylenes which are copolymers of ethylene and vinyl compounds.

**16.** A packaging material as in claim 13, wherein the glycidyl ester of an α,β-unsaturated carboxylic acid is represented by formula:

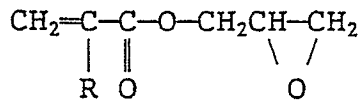

wherein R represents a hydrogen atom, a lower alkyl group, or a lower alkyl group substituted by a carboxyl group or a glycidyl ester group.

**17.** A packaging material as in claim 13, wherein the copolymerized amount of the α,β-glycidyl ester in the glycidyl group-containing copolymer (C) is from 1 to 50 % by weight.

**18.** A packaging material as in claim 13, wherein the amount of glycidyl group-containing copolymer (C) in the thermoplastic resin composition is from 2 to 20 parts by weight.

**19.** A thermoplastic resin container obtained by the stretch blow molding of a thermoplastic resin composition comprising:
(1) 100 parts by weight of a resin composition comprising from 50 to 90% by weight, based on the total amount of the resin composition (1), of a polyester resin (A) and from 50 to 10% by weight, based on the total amount of the resin composition (2), of polyethylene (B); and
(2) from 1 to 30 parts by weight of a glycidyl group-containing copolymer (C) comprising ethylene monomer units and monomer units of a glycidyl ester of an α,β-unsaturated carboxylic acid.

**20.** A container as in claim 19, wherein the polyester resin (A) is a thermoplastic polymer or copolymer obtained by the condensation polymerization of monomers comprising a dicarboxylic acid or a derivative thereof and a diol or a derivative thereof.

**21.** A container as in claim 19, wherein the polyethylene (B) is at least one selected from the group consisting of low density polyethylenes obtained by high pressure processes, linear low density polyethylenes which are copolymers of ethylene and α-olefins and obtained by medium-to-low pressure processes, high-to-medium density polyethylenes obtained by medium-to-low pressure processes, and modified polyethylenes which are copolymers of ethylene and vinyl compounds.

**22.** A container as in claim 19, wherein the glycidyl ester of an α,β-unsaturated carboxylic acid is represented by formula:

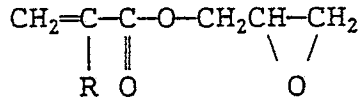

wherein R represents a hydrogen atom, a lower alkyl group, or a lower alkyl group substituted by a carboxyl group or a glycidyl ester group.

**23.** A container as in claim 19, wherein the copolymerized amount of the $\alpha,\beta$-glycidyl ester in the glycidyl group-containing copolymer (C) is from 1 to 50 % by weight.

**24.** A container as in claim 19, wherein the amount of glycidyl group-containing copolymer (C) in the thermoplastic resin composition is from 2 to 20 parts by weight.

**25.** A container as in claim 19, wherein the amount of the polyester resin (A) is from 50 to 90 % by weight based on the total weight of the resin composition and the amount of the polyethylene (B) is from 50 to 10 % by weight based on the total weight of the resin composition.